# FASCICULE DE BREVET EUROPEEN

(11) **EP 3 519 887 B1**
(45) Date de publication et mention de la délivrance du brevet: **05.10.2022**
(21) Numéro de dépôt: 17777047.6
(22) Date de dépôt: 28.09.2017
(51) Int. Cl.: G02F 1/1335

(54) **DISPOSITIF D'AFFICHAGE POUR VÉHICULE AUTOMOBILE ET PROCÉDÉ DE FABRICATION**
ANZEIGEVORRICHTUNG FÜR EIN KRAFTFAHRZEUG UND HERSTELLUNGSVERFAHREN
DISPLAY DEVICE FOR MOTOR VEHICLE AND MANUFACTURING PROCESS

(30) Priorité: 28.09.2016 FR 1659259
(43) Date de publication de la demande: 07.08.2019
(73) Titulaire: DAV, 94046 Créteil Cedex (FR)
(72) Inventeur: AUBRY, Anthony, 94046 Créteil Cedex (FR)
(74) Mandataire: Delplanque, Arnaud
(86) Numéro de dépôt international: PCT/EP2017/074716
(87) Numéro de publication internationale: WO 2018/060382

(56) Documents cités:
- US-A1- 2012 235 048
- US-A1- 2014 197 317
- US-A1- 2016 054 175

## Description

La présente invention concerne un dispositif d'affichage, en particulier de commande et d'affichage à surface tactile pour véhicule automobile. Plus précisément, un tel dispositif trouve une application pour les commandes situées à proximité du conducteur, au niveau du tableau de bord ou de la console avant du véhicule. Le dispositif peut par exemple commander des fonctions telles que la climatisation, un système audio, un système de téléphonie ou encore un système de navigation. L'invention se rapporte plus précisément à un procédé de fabrication dudit dispositif de commande et d'affichage et au dispositif lui-même.

Les dispositifs de commande et d'affichage de véhicule automobile comportent un écran pour l'affichage de données d'informations ou de commandes. Ces écrans sont généralement recouverts d'une plaque de protection, par exemple en verre ou en polycarbonate pour servir de protection d'une part à l'écran et le cas échéant d'autre part à une dalle tactile permettant la saisie de commandes par les utilisateurs et disposée au-dessus de l'écran d'affichage.

Une dalle tactile permet par exemple de localiser l'appui d'un doigt de l'utilisateur en utilisant une technologie capacitive ou résistive. La localisation de l'appui peut alors être mise en relation avec des champs de saisie correspondant à différentes options (accepter, refuser, retour au menu précédent, etc...) qui sont affichés par l'écran situé derrière la dalle tactile.

Pour des raisons esthétiques, une zone périphérique de la plaque de protection est teintée, souvent en noir, par une encre, par exemple par sérigraphie, pour ainsi délimiter une zone centrale d'affichage.

On comprend donc que les dispositifs d'affichage se présentent sous forme d'un empilement de différentes couches. Ces différentes couches sont assemblées par collage entre elles par l'intermédiaire d'une résine polymérisable par un rayonnement UV (ultraviolet).

Lors de l'assemblage, il est nécessaire de faire durcir la résine entre la plaque de protection et l'écran à l'aide d'un rayonnement UV.

Dans la partie centrale transparente dans le domaine visible, cela ne pose pas de problème car les rayons UV traversent la plaque de protection sans problème dans sa partie centrale transparente.

En revanche, dans la zone périphérique teintée, les rayons UV sont généralement absorbés. Il en résulte que le durcissement peut être seulement partiel car les rayons UV n'arrivent pas donc pas ou seulement de manière insuffisante en termes d'intensité et/ ou de durée à traverser la zone périphérique colorée.

Pour résoudre ce problème, le temps d'exposition au rayonnement UV doit alors être rallongé ou on doit augmenter l'intensité d'irradiation des UV. Ceci augmente le coût de fabrication des dispositifs connus.

Une autre solution connue (US20120235048) consiste à utiliser une encre spéciale contenant d'une part par exemple du noir de carbone et d'autre part un matériau transmettant des rayons UV.

Même si cette encre permet une fabrication améliorée par rapport à l'état de la technique, on doit tout même constater que le noir de carbone contenu dans cette encre absorbe tout de même de façon importante les rayons UV.

Par ailleurs, on connaît des dispositifs d'affichage et de commande équipés d'un détecteur d'approche ou un détecteur de gestes comprenant une ou plusieurs diodes d'émission et de réception travaillant dans le domaine de l'infrarouge.

Les diodes d'émission et de détection sont généralement disposées en dessous du dispositif d'affichage tel que décrit ci-dessus, ce qui est encombrant. De plus, il est généralement difficile de les rendre invisible aux yeux des utilisateurs.

Également la demande US2016054175 divulgue un dispositif d'affichage. Afin de pallier au moins partiellement les défauts précédemment cités, l'invention a pour objet un dispositif d'affichage comprenant dans un empilement :
- un écran d'affichage,
- une plaque de protection, présentant une zone teintée délimitant au moins une zone d'affichage pour ledit écran d'affichage,
- au moins une couche de résine disposée entre l'écran d'affichage et la plaque de protection,
caractérisé en ce que
- la couche de résine est une résine polymérisable ou polymérisé par exposition au rayonnement UV,

- en ce qu'il comporte en outre au moins une diode fonctionnant dans l'infrarouge et disposée dans ladite zone teintée derrière la plaque de protection,
- la zone teintée étant teintée à l'aide de pigment(s) et/ou de colorant(s), lesdits colorant(s) et/ou pigment(s) coopérant ensemble afin d'absorber la lumière traversant la zone teintée, la zone teintée ayant un spectre de transmission tel que:
   - la transmission est supérieure à 2%, en particulier supérieur à 5% et notamment supérieure à 25% entre 390nm et 425nm,
   - la transmission est inférieure à 20%, en particulier inférieure à 15%, et notamment inférieure 10% entre 425nm et 650nm,
   - la transmission est supérieure à 10%, notamment supérieure à 20% entre 700nm et 1000nm.

La transparence importante dans la gamme spectrale utilisée pour le durcissement du matériau formant la couche de remplissage simplifie et rend moins coûteux le procédé de fabrication considéré.

En ayant une transmission importante dans l'infrarouge, on peut alors disposer de l'espace « perdu » pour y placer des diodes d'émission ou de détection travaillant dans l'infrarouge (IR) pour par exemple un détecteur d'approche ou un détecteur de gestes.

En plus des fonctions de détection et de commande, le dispositif d'affichage peut également intégrer des fonctions de détection (détection d'approche, détection de gestes etc.)

Le dispositif d'affichage peut en outre présenter une ou plusieurs des caractéristiques suivantes, prises seules ou en combinaison.

Selon un aspect, la transmission augmente de façon monotone entre 700nm et 1100nm.

Selon un autre aspect, la transmission est supérieure à 60% à partir de 850nm.

Le spectre comporte par exemple un premier maximum de transmission entre 390nm et 430nm, notamment entre 405nm et 415nm ayant une transmission supérieure à 2% notamment supérieure à 5%, en particulier supérieure à 35%.

Le spectre peut comporter un deuxième maximum de transmission entre 400nm et 430nm, notamment entre 405nm et 415nm ayant une transmission supérieure à 20 %.

La zone teintée comporte par exemple une encre sérigraphie contenant les pigment(s) et/ou colorant(s).

Ladite au moins une diode est une diode d'émission de lumière infrarouge ou une diode de réception de lumière infrarouge.

Le dispositif d'affichage peut comporter en outre une dalle tactile transparente disposée entre la plaque de protection et l'écran d'affichage.

D'autres avantages et caractéristiques apparaîtront à la lecture de la description des figures suivantes, données à titre d'exemple non limitatif.
- la figure 1 est une vue en perspective et en éclaté d'un dispositif d'affichage selon l'invention,
- la figure 2 est une vue de dessus sur un dispositif d'affichage de la figure 1,
- la figure 3 est une vue en coupe transversale selon la ligne III-III de la figure 2,
- la figure 4 est une vue en coupe transversale selon la ligne VI-VI de la figure 2,
- la figure 5 montre un exemple d'un spectre de transmission d'une zone périphérique teintée de la plaque de protection de la figure 2, et
- la figure 6 montre deux autres exemples de spectres de transmission d'une zone périphérique teintée de la plaque de protection de la figure 2.

Sur toutes les figures les mêmes références s'appliquent aux mêmes éléments.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Par élément « avant » ou élément « arrière », on se réfère à la position de l'utilisateur par rapport au dispositif d'affichage.

Ainsi un élément « avant » est toujours plus proche de l'utilisateur qu'un élément « arrière » en cours de fonctionnement.

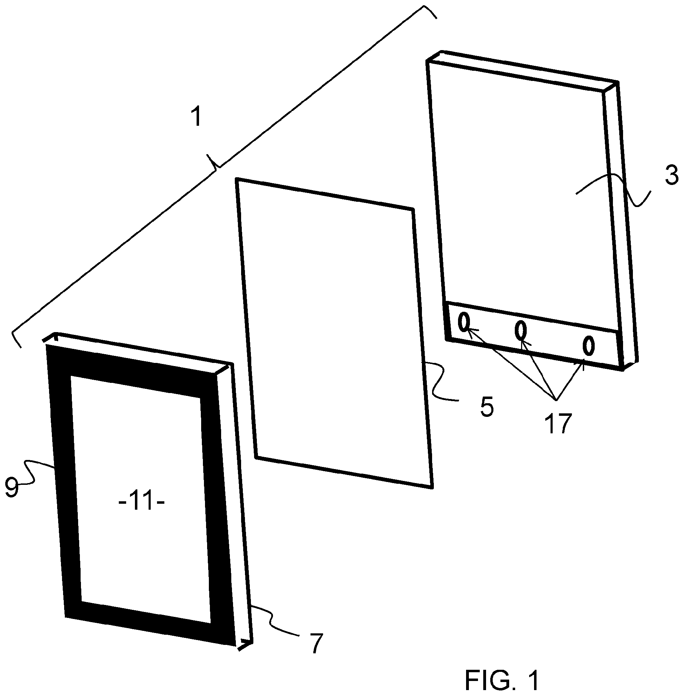

La figure 1 montre de façon schématique et simplifié en éclaté les différents composants d'un dispositif d'affichage 1 pour véhicule automobile, par exemple agencée sensiblement verticalement dans un tableau de bord du véhicule.

Cette interface de commande 1 trouve une utilisation particulièrement avantageuse dans un habitacle de véhicule automobile, notamment pour être intégré dans un tableau de commande et d'affichage dans le but d'afficher des informations concernant les fonctions à commander par exemple pour le système, audio, la climatisation, le chauffage, le système de navigation ou encore le système de téléphonie.

Ce dispositif d'affichage 1 comprend dans un empilement en allant de l'arrière vers l'avant un écran d'affichage 3, une dalle tactile transparente 5 et une plaque de protection 7.

L'écran d'affichage 3 est par exemple un écran TFT, un écran LED, LCD ou OLED par exemple.

La dalle tactile transparente 5 est par exemple une dalle tactile capacitive. Dans cet empilage, la dalle tactile transparente 5 est facultative.

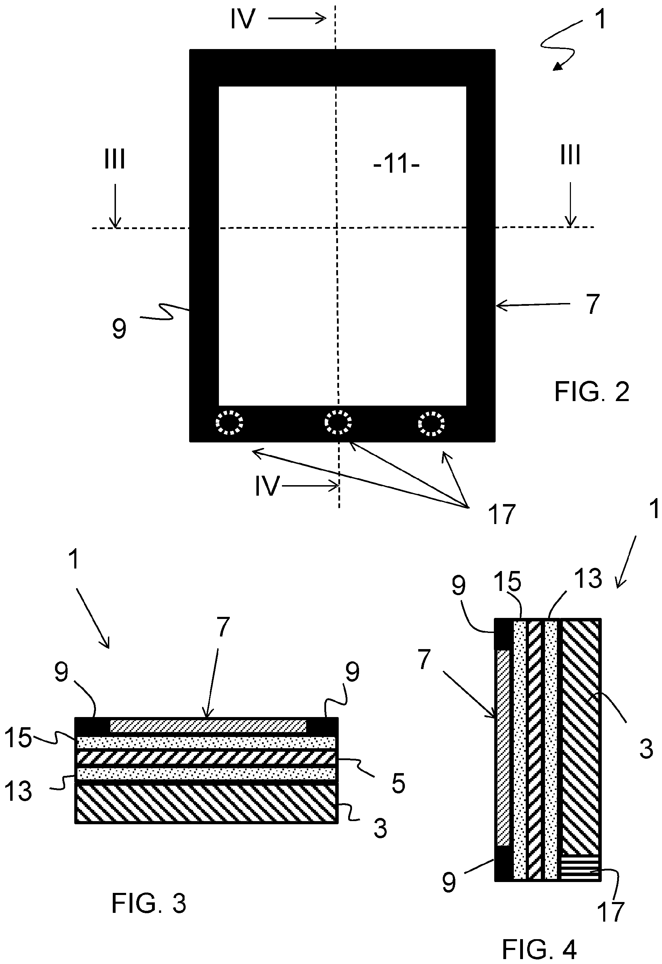

La plaque de protection 7 peut être en verre ou en polycarbonate transparent. Comme on le voit sur la figure 1, la plaque de protection 7 présente une zone teintée 9. Cette zone teintée 9 périphérique délimite au moins une zone d'affichage 11, dans le présente cas une zone d'affichage centrale 11 pour l'écran d'affichage 3 (voir aussi figure 2. La zone d'affichage centrale 11 laisse passer les rayons de lumière dans le visible émis par l'écran d'affichage.

Pour assembler ces différents éléments de l'empilement, on utilise une résine polymérisable par exemple par un rayonnement UV.

Sur la figure 3, l'empilement des divers composants du dispositif d'affichage 1 est représenté en coupe transversale selon la ligne III-III de la figure 2 et on voit une première couche de résine 13 entre la dalle tactile transparente 5 et l'écran d'affichage 3 et une deuxième couche de résine 15 entre la dalle tactile transparente 5 et la plaque de protection 7.

Sur cette figure en coupe, la zone teintée 9 est également représentée au niveau de la plaque de protection 7.

Par ailleurs, comme on le voit sur la figure 1, en dessous de l'écran d'affichage 3 sont par exemple disposées au moins une diode 17, dans le présent cas trois diodes 17 fonctionnant dans l'infrarouge, par exemple entre 800nm et 1200nm.

Ces diodes 17 peuvent être des diodes d'émission ou de réception. Elles peuvent faire partie d'un détecteur d'approche et/ ou d'un détecteur de gestes de la main de l'utilisateur par exemple.

Sur la figure 2, les trois diodes 17 sont indiquées pour des raisons d'illustration par des cercles blancs en traits, mais celles-ci ne sont pas visible pour un oeil de l'utilisateur car elles sont cachées dernière la zone périphérique teinté 9. L'utilisateur ne perçoit qu'une surface noir au niveau de la zone teintée 9.

La figure 4 représente le dispositif d'affichage 1 en coupe transversale selon la ligne VI-VI de la figure 2. On voit que la diode 17 est disposée derrière la plaque de protection 7 et ceci au niveau de la zone périphérique teintée 9.

La zone périphérique 9 est teintée soit en surface, par application d'une encre en sérigraphie, soit dans la masse.

Cependant l'application d'une encre par sérigraphie par exemple est préférée car cela permet une plus grande flexibilité dans la fabrication des écrans de protection 7.

Ainsi, on peut aussi concevoir une plaque de protection 7sur laquelle sont délimitées plusieurs zones d'affichage 11.

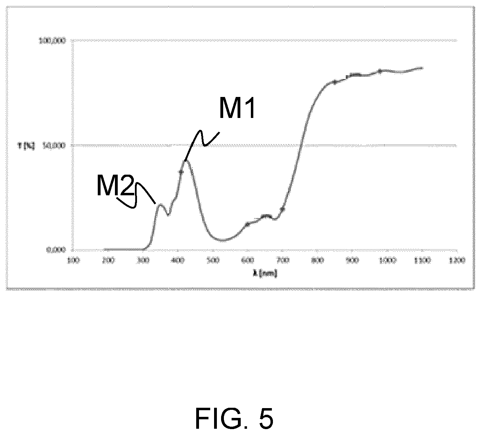

Afin de favoriser d'une part la polymérisation de la résine des couches 13 et 15 lors de l'assemblage et permettre le fonctionnement des diodes 17 disposées derrière la plaque de protection 7 dans la zone périphérique teintée 9, la zone périphérique est teintée à l'aide de pigment(s) et/ou de colorant(s), lesdits colorant(s) et/ou pigment(s) coopérant ensemble afin d'absorber la lumière traversant la zone périphérique, la zone périphérique colorée ayant un spectre de transmission spécifique. Un exemple d'un tel spectre de transmission spécifique représentée sur la figure 5.

On observe que la transmission est supérieure à 10%, en particulier supérieur à 20% et notamment supérieure à 25% entre 350nm et 450nm, ce qui permet aux rayons UV de passer en grande partie et d'amorcer la polymérisation notamment par libération de radicaux d'un photo-amorceur.

La transmission est inférieure à 25%, en particulier inférieure à 20%, et notamment inférieure 15% entre 450nm et 700nm pour avoir l'effet masque noir (« black mask »).
Puis, la transmission est supérieure à 10%, notamment supérieure à 20% entre 700nm et 1100nm pour permettre l'émission et/ou la réception de rayon de lumière dans l'infrarouge pour permettre le fonctionnement des diodes 17.

On observe que la transmission augmente de façon monotone entre 700nm et 1100nm.

Apartir de 850nm, la transmission est même supérieure à 80%.

De plus, le spectre comporte un premier maximum M1 de transmission entre 400nm et 430nm, notamment entre 405nm et 415nm ayant une transmission supérieure à 30% notamment supérieure à 35%.

Le spectre comporte en outre un deuxième maximum M2 de transmission entre 400nm et 430nm, notamment entre 405nm et 415nm ayant une transmission supérieure à 20%.

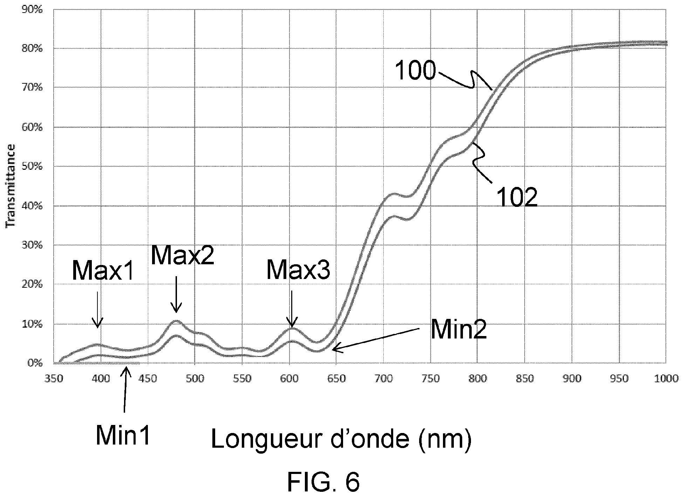

La figure 6 montre deux spectres de transmission 100 et 102 en fonction de la longueur d'onde en nm.

Concernant la courbe 100, il s'agit d'un spectre de transmission au travers d'une couche d'encre appliquée par une impression simple alors que pour la courbe 102, il s'agit d'un spectre de transmission au travers d'une double couche d'encre appliquée par une impression double en utilisant la même encre que celle de la courbe 100.

Comme on le voit sur cette figure 6, la courbe 100 présente un premier maximum Max1 à 400nm avec un taux de transmission de 5%. Puis la transmission baisse légèrement jusqu'à un minimum Mini vers 425nm. Par la suite la transmission remonte jusqu'à un maximum Max2 autour de 450nm avec une transmission autour de 11%.

A partir du deuxième maximum Max2, la transmission rebaisse pour évoluer autour de 4% vers 550nm et remonte ensuite vers un maximum Max3 d'environ 9% de transmission autour de 600nm. Puis, la transmission baisse vers 6% aux alentours de 630nm vers un minium Min 2. Enfin, la transmission remonte pour atteindre 40% à 700nm 50% à 750% et 77% vers 850nm pour atteindre 80% vers 1000nm.

La courbe 102 évolue de façon similaire. Comme on le voit sur cette figure 6, la courbe 102 présente un premier maximum Max1 à 400nm avec un taux de transmission de 2%. Puis la transmission baisse légèrement jusqu'à un minimum Mini vers 425nm. Par la suite la transmission remonte jusqu'à un maximum Max2 autour de 450nm avec une transmission autour de 8%.

A partir du deuxième maximum Max2, la transmission rebaisse pour évoluer autour de 2% vers 550nm et remonte ensuite vers un maximum Max3 d'environ 6% de transmission autour de 600nm. Puis, la transmission baisse vers 4% aux alentours de 630nm vers un minium Min 2. Enfin, la transmission remonte pour atteindre 36% à 700nm 46% à 750% et 75% vers 850nm pour atteindre 79% vers 1000nm.
Comme dit précédemment, les pigment(s) et/ou colorant(s) peuvent être contenu dans la plaque de protection 7 elle-même (teinté dans la masse) ou être contenu dans une encre pouvant être appliquée sur la plaque de protection 7.

Pour réaliser l'empilement comme décrit ci-dessus, il suffit donc de mettre par exemple une couche de résine polymérisable à l'UV 13 sur l'écran d'affichage 3, puis de mettre la dalle tactile transparente 5 et ensuite à nouveau une couche de résine polymérisable à l'UV 15 et puis de placer la plaque de protection 7sur cet couche de résine 15.

Ensuite, on soumet l'ensemble à un rayonnement UV ce qui a pour effet de polymériser les couches de résine 13 et 15.

Grâce au spectre de transmission spécifique dans la zone périphérique, il n'est plus nécessaire de rallonger le temps d'exposition ou d'augmenter l'intensité du rayonnement UV, car les rayons UV peuvent suffisamment traverser la couche d'encre de la zone teintée 9 pour amorcer la photopolymérisation.

De plus, on peut disposer les diodes travaillant dans l'infrarouge derrière la zone teintée 9, ce qui permet de réduire l'encombrement par rapport à un dispositif d'affichage où les diodes doivent être disposées à part.

## Revendications

1. Dispositif d'affichage (1) comprenant dans un empilement :
- un écran d'affichage (3),
- une plaque de protection (7), présentant une zone teintée (9) délimitant au moins une zone d'affichage (11) pour ledit écran d'affichage (3),
- au moins une couche de résine (13,15) disposée entre l'écran d'affichage (3) et la plaque de protection (7),
**caractérisé en ce que**
- la couche de résine (13, 15) est une résine polymérisable ou polymérisé par exposition au rayonnement UV,
- **en ce qu'**il comporte en outre au moins une diode (17) fonctionnant dans l'infrarouge et disposée dans ladite zone teintée (9) derrière la plaque de protection (7),
- la zone teintée (9) étant teintée à l'aide de pigment(s) et/ou de colorant(s), lesdits colorant(s) et/ou pigment(s) coopérant ensemble afin d'absorber la lumière traversant la zone teintée (9), la zone teintée (9) ayant un spectre de transmission tel que:
- la transmission est supérieure à 2%, en particulier supérieur à 5% et notamment supérieure à 25% entre 390nm et 425nm,
- la transmission est inférieure à 20%, en particulier inférieure à 15%, et notamment inférieure 10% entre 425nm et 650nm,
- la transmission est supérieure à 10%, notamment supérieure à 20% entre 700nm et 1000nm.

2. Dispositif d'affichage (1) selon la revendication 1, **caractérisé en ce que** la transmission augmente de façon monotone entre 700nm et 1000nm.

3. Dispositif d'affichage (1) selon l'une quelconque des revendications précédentes, **caractérisé en ce que** la transmission est supérieure à 60% à partir de 850nm.

4. Dispositif d'affichage (1) selon l'une quelconque des revendications précédentes, **caractérisé en ce que** le spectre comporte un premier maximum de transmission (M1) entre 390nm et 430nm, notamment entre 405nm et 415nm ayant une transmission supérieure à 2% notamment supérieure à 5%, en particulier supérieure à 35%.

5. Dispositif d'affichage (1) selon l'une quelconque des revendications précédentes, **caractérisé en ce que** le spectre comporte un deuxième maximum de transmission (M2) entre 400nm et 430nm, notamment entre 405nm et 415nm ayant une transmission supérieure à 20%.

6. Dispositif d'affichage (1) selon l'une quelconque des revendications précédentes, **caractérisé en ce que** la zone teintée (9) comporte une encre sérigraphie contenant les pigment(s) et/ou colorant(s).

7. Dispositif d'affichage (1) selon l'une quelconque des revendications précédentes, **caractérisé en ce qu'**au moins une diode (17) est une diode d'émission de lumière infrarouge.

8. Dispositif d'affichage (1) selon l'une quelconque des revendications précédentes, **caractérisé en ce qu'**au moins une diode (17) est une diode de réception de lumière infrarouge.

9. Dispositif d'affichage (1) selon l'une quelconque des revendications précédentes, **caractérisé en ce qu'**il comporte en outre une dalle tactile (5) transparente disposée entre la plaque de protection (7) et l'écran d'affichage (3).

## Patentansprüche

1. Anzeigevorrichtung (1) umfassend in einem Stapel:
- einen Anzeigebildschirm (3),
- eine Schutzplatte (7) mit einem getönten Bereich (9), der wenigstens einen Anzeigebereich (11) für den Anzeigebildschirm (3) begrenzt,
- wenigstens eine Harzschicht (13, 15), die zwischen dem Anzeigebildschirm (3) und der Schutzplatte (7) angeordnet ist,
**dadurch gekennzeichnet, dass**
- die Harzschicht (13, 15) ein Harz ist, das durch Belichtung mit UV-Strahlung polymerisierbar oder polymerisiert ist,
- dadurch, dass sie ferner wenigstens eine Diode (17) aufweist, die im Infrarotbereich arbeitet und im getönten Bereich (9) hinter der Schutzplatte (7) angeordnet ist,
- wobei der getönte Bereich (9) mithilfe von Pigment(en) und/oder Farbstoff(en) getönt ist, wobei der bzw. die Farbstoff (e) und/oder das bzw. die Pigment(e) zusammenwirken, um das Licht zu absorbieren, das durch den getönten Bereich (9) hindurchtritt, wobei der getönte Bereich (9) ein Transmissionsspektrum aufweist, so dass:
- die Transmission zwischen 390 nm und 425 nm größer als 2 %, insbesondere größer als 5 % und insbesondere größer als 25 % ist,
- die Transmission zwischen 425 nm und 650 nm kleiner als 20 %, insbesondere kleiner als 15 % und insbesondere kleiner als 10 % ist,
- die Transmission zwischen 700 nm und 1000 nm größer als 10 %, insbesondere größer als 20 % ist.

2. Anzeigevorrichtung (1) nach Anspruch 1, **dadurch gekennzeichnet, dass** die Transmission zwischen 700 nm und 1000 nm monoton zunimmt.

3. Anzeigevorrichtung (1) nach einem der vorhergehenden Ansprüche, **dadurch gekennzeichnet, dass** die Transmission ab 850 nm größer als 60 % ist.

4. Anzeigevorrichtung (1) nach einem der vorhergehenden Ansprüche, **dadurch gekennzeichnet, dass** das Spektrum ein erstes Transmissionsmaximum (M1) zwischen 390 nm und 430 nm, insbesondere zwischen 405 nm und 415 nm mit einer Transmission größer als 2 %, insbesondere größer als 5 % und insbesondere größer als 35 % aufweist.

5. Anzeigevorrichtung (1) nach einem der vorhergehenden Ansprüche, **dadurch gekennzeichnet, dass** das Spektrum ein zweites Transmissionsmaximum (M2) zwischen 400 nm und 430 nm, insbesondere zwischen 405 nm und 415 nm mit einer Transmission größer als 20% aufweist.

6. Anzeigevorrichtung (1) nach einem der vorhergehenden Ansprüche, **dadurch gekennzeichnet, dass** der getönte Bereich (9) eine Siebdrucktinte aufweist, die die Pigment(e) und/oder Farbstoff(e) enthält.

7. Anzeigevorrichtung (1) nach einem der vorhergehenden Ansprüche, **dadurch gekennzeichnet, dass** wenigstens eine Diode (17) eine Diode zur Aussendung von Infrarotlicht ist.

8. Anzeigevorrichtung (1) nach einem der vorhergehenden Ansprüche, **dadurch gekennzeichnet, dass** wenigstens eine Diode (17) eine Diode zum Empfang von Infrarotlicht ist.

9. Anzeigevorrichtung (1) nach einem der vorhergehenden Ansprüche, **dadurch gekennzeichnet, dass** sie ferner eine transparente Berührtafel (5) aufweist, die zwischen der Schutzplatte (7) und dem Anzeigebildschirm (3) angeordnet ist.

## Claims

1. Display device (1) comprising, in a stack:
- a display screen (3),
- a protective plate (7), exhibiting a tinted zone (9) delimiting at least one display zone (11) for said display screen (3),
- at least one resin layer (13, 15) positioned between the display screen (3) and the protective plate (7),
**characterized in that**
- the resin layer (13, 15) is a resin polymerizable or polymerized by exposure to UV radiation,
- **in that** it additionally comprises at least one diode (17) operating in the infrared and positioned in said tinted zone (9) behind the protective plate (7),
- the tinted zone (9) being tinted using pigment(s) and/or dye(s), said dye(s) and/or pigment(s) cooperating together in order to absorb the light passing through the tinted zone (9), the tinted zone (9) having a transmission spectrum such that:
- the transmission is greater than 2%, in particular greater than 5% and especially greater than 25% between 390 nm and 425 nm,
- the transmission is less than 20%, in particular less than 15% and especially less than 10% from 425 nm and 650 nm,
- the transmission is greater than 10%, in particular greater than 20%, between 700 nm and 1000 nm.

2. Display device (1) according to Claim 1, **characterized in that** the transmission increases in monotone fashion between 700 nm and 1000 nm.

3. Display device (1) according to either one of the preceding claims, **characterized in that** the transmission is greater than 60% starting from 850 nm.

4. Display device (1) according to any one of the preceding claims, **characterized in that** the spectrum comprises a first transmission maximum (Ml) between 390 nm and 430 nm, in particular between 405 nm and 415 nm, having a transmission of greater than 2%, in particular of greater than 5%, especially of greater than 35%.

5. Display device (1) according to any one of the preceding claims, **characterized in that** the spectrum comprises a second transmission maximum (M2) between 400 nm and 430 nm, in particular between 405 nm and 415 nm, having a transmission of greater than 20%.

6. Display device (1) according to any one of the preceding claims, **characterized in that** the tinted zone (9) comprises a screen printing ink containing the pigment(s) and/or dye(s).

7. Display device (1) according to any one of the preceding claims, **characterized in that** at least one diode (17) is an infrared light-emitting diode.

8. Display device (1) according to any one of the preceding claims, **characterized in that** at least one diode (17) is an infrared light-receiving diode.

9. Display device (1) according to any one of the preceding claims, **characterized in that** it additionally comprises a transparent touch pad (5) positioned between the protective plate (7) and the display screen (3).
